# EUROPÄISCHE PATENTSCHRIFT

(11) **EP 1 203 893 B1**
(45) Veröffentlichungstag und Bekanntmachung des Hinweises auf die Patenterteilung: **07.12.2005**
(21) Anmeldenummer: 01125837.3
(22) Anmeldetag: 30.10.2001
(51) Int. Cl.: F16C 33/10, A01C 3/02

(54) **Vorrichtung zum Homogenisieren von Gülle**
Slurry agitator-mixer
Appareil pour homogénéiser du lisier

(30) Priorität: 02.11.2000 DE 10054390
(43) Veröffentlichungstag der Anmeldung: 08.05.2002
(73) Patentinhaber: Reck, Anton, 88422 Betzenweiler (DE)
(72) Erfinder: Reck, Anton, 88422 Betzenweiler (DE)
(74) Vertreter: Eisele, Otten, Roth & Dobler

(56) Entgegenhaltungen:
- DE-A- 3 833 557
- DE-A- 19 841 784

## Beschreibung

Die Erfindung betrifft eine Vorrichtung zum Homogenisieren von Gülle nach dem Oberbegriff des Anspruchs 1, siehe DE-A-19841784.

In Schweineställen und Kuhställen mit Spaltenböden wird die Gülle häufig in Kanälen unter den Spaltenböden gesammelt. Beim Absetzvorgang der Gülle bildet sich am Boden der Sammelgrube eine Sinkschicht, auf welche eine Flüssigkeitsschicht folgt, die von einer torfartigen Schwimmschicht aus festen Bestandteilen überdeckt wird. Um die Gülle z.B. für einen Ausbringvorgang fließfähig zu machen, werden Rührwerke eingesetzt, die sich durch die Längsschlitze der Spaltenböden in die Kanäle mit Gülle einführen lassen.

Dementsprechend weisen Güllerührer, die sich für das Einführen in die Spaltenschlitze eignen, eine plattenartige Rühreinrichtung auf.

Die Rühreinrichtung umfasst im Allgemeinen eine Rührwelle mit Rührflügel und zwei Stützen mit einer Lagerstelle für die Rührwelle.

Bei einigen Ausführungsformen ist mehr als eine Lagerstelle zur Lagerung der Rührwelle vorgesehen.

Insbesondere aus Platzgründen, aber auch zur Erzielung eines einfachen Aufbaus der Rühreinrichtung sind die Lagerstellen normalerweise als Gleitlager ausgeführt. Gleitlager unterliegen jedoch bekanntermaßen einem gewissen Verschleiß, was von Zeit zu Zeit einen Austausch der Lager notwendig macht.

### Aufgabe und Vorteile der Erfindung

Der Erfindung liegt die Aufgabe zugrunde, die Laufzeit einer Rühreinrichtung zu erhöhen.

Diese Aufgabe wird durch die Merkmale des Anspruchs 1 gelöst.

In den Unteransprüchen sind einfache und vorteilhafte Weiterbildungen der Erfindung angegeben.

Die Erfindung geht von einer Vorrichtung zum Homogenisieren von Gülle, im folgenden mit Güllemixer bezeichnet, aus, die ein Gestell umfasst, an dem ein Motor mit plattenartiger Rühreinrichtung, im folgenden mit Schwert bezeichnet, angebracht ist, wobei das Schwert eine Rührwelle mit Rührflügel und eine Stütze mit einer Lagerstelle für die Rührwelle aufweist. Der Kern der Erfindung liegt nun darin, dass das Schwert einen Vorratstank für Schmiermittel umfasst, der mit einer Lagerfläche der Lagerstelle in Verbindung steht. Unter Vorratstank wird im Sinne der Erfindung eine Einrichtung zur Unterbringung eines gewissen Vorratsvolumens von Schmiermittel verstanden. Auf diese Weise kann die Lagerstelle beim Betrieb der Vorrichtung kontinuierlich mit Schmiermittel versorgt werden, was die Lebensdauer der Lagerstelle und damit die effektiv mögliche Einsatzzeit der Rühreinrichtung ohne Wartung bzw. ohne nennenswerte Wartung, die lediglich ein Auffüllen des Vorratstanks mit Schmiermittel umfasst, beträchtlich erhöht. Nach der Erfindung ist der Vorratstank in der Stütze untergebracht. Auf diese Weise sind keine weiteren außenliegenden Konstruktionselemente für die Bereitstellung eines Vorratstanks notwendig, die gegebenenfalls im rauen Einsatzfall beschädigt werden können. Die Stütze ist zumindest teilweise hohl, wobei dieser Hohlraum als Vorratstank für das Schmiermittel dient. Dies stellt eine besonders elegante Möglichkeit der Realisierung eines Vorratstanks für Schmiermittel dar. Denn außer einem Befüllorgan, z.B. einem Schmiernippel, das mit dem Hohlraum in Verbindung steht und einem Kanal zur Lagerstelle, die geschmiert werden soll, sind keine zusätzlichen konstruktiven Elemente für die Bereitstellung eines derartigen Schmiersystems erforderlich, da die Stütze regelmäßig ohnehin bereits hohl ist.

Im Weiteren ist es besonders bevorzugt, wenn der Vorratstank als Rohrabschnitt ausgestaltet ist, der in der sonst hohlen Stütze verläuft. Durch diese Maßnahme kann der Transport von Schmiermittel zur Lagerstelle und das notwendige Volumen an Schmiermittel besser kontrolliert werden. Insgesamt ist insbesondere bei der Erstbefüllung weniger Schmiermittel notwendig, das durch ein langsames Nachfließen im Rohrabschnitt gezielt zur Lagerstelle geführt wird.

Um einen schmutzdichten Verschluss zum Befüllen des Vorratstanks zu erhalten, wird dieser vorzugsweise durch einen Schmiernippel befüllt. Dabei kann ein Vorratstank auch über mehr als einen Schmiernippel befüllbar sein.

Außerdem ist es bevorzugt, dass bei mehr als einer Lagerstelle für die Rührwelle für jede Lagerstelle ein Vorratstank bereitgestellt wird. Dies kann z.B. durch jeweils einen in der Stütze geführten Rohrabschnitt zur jeweiligen Lagerstelle erfolgen. Jedoch ist es auch möglich, insbesondere für den Fall, dass zwei parallel geführte Stützen am Schwert vorgesehen sind, eine Stütze für die Unterbringung von Schmiermittel zu einer ersten Lagerstelle und die andere Stütze für die Unterbringung von Schmiermittel zu einer weiteren Lagerstelle der Rührwelle zu nutzen. Dazu kann eine hohle Stütze vollständig als Vorratstank dienen. Genauso ist es jedoch möglich, in der jeweiligen hohlen Stütze einen Rohrabschnitt unterzubringen, der mit der Lagerstelle in Verbindung steht und ein Befüllorgan besitzt.

Um eine weitere beträchtliche Erhöhung der Laufzeit einer Rühreinrichtung zu erzielen, wird im Weiteren vorgeschlagen, dass die Lagerstelle ein Lagerelement umfasst, das wenigstens zwei nebeneinander liegende Lageröffnungen besitzt, durch welche die Rührwelle durchführbar ist. Darüber hinaus ist das Lagerelement so ausgestaltet, dass durch einen einfachen Umbau die jeweilige Lageröffnung als Lagerstelle für die Rührwelle genutzt werden kann. Auf diese Weise wird es möglich, bei einem Verschleiß einer Lageröffnung ohne die Notwendigkeit eines Ersatzteils eine weitere neuwertige Lagerstelle bereitzustellen. Insbesondere in Kombination mit einer entsprechenden Schmierung der Lagerstelle kann dadurch eine gut funktionierende Lagerung der Rührwelle über einen sehr langen Zeitraum ohne nennenswerte kostenintensive Reparaturmaßnahmen erzielt werden.

### Beschreibung der Ausführungsbeispiele

Mehrere Ausführungsbeispiele der Erfindung sind in den Zeichnungen dargestellt und unter Angabe weiterer Vorteile und Einzelheiten näher erläutert. Es zeigen
- Figur 1: einen vollständigen Güllemixer mit Schwert in einer Seitenansicht,
- Figur 2a bis 2e: verschiedene Ausführungsformen eines Güllemixerschwertes in einer teilweise geschnittenen Seitenansicht ohne Rührflügel,
- Figur 3a: eine weitere Ausführungsform eines Schwerts in einer teilweise geschnittenen Seitenansicht ohne Rührflügel mit einem Lagerelement in einer ersten Position,
- Figur 3b: das Schwert aus Figur 3a ausschnittsweise in einer teilweise geschnittenen Seitenansicht mit einem Lagerelement in einer zweiten Position und
- Figur 3c: das Lagerelement für ein Schwert gemäß Figur 3a und 3b in einer Draufsicht.

### Beschreibung der Ausführungsbeispiele:

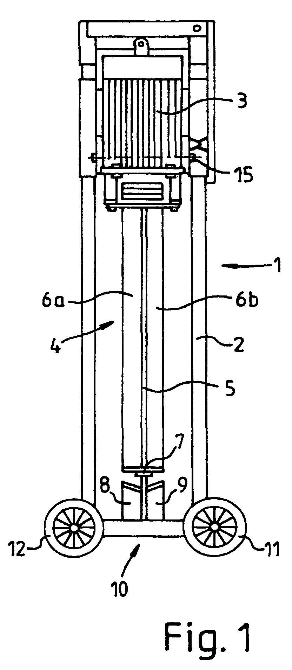

Ein kompletter Güllemixer 1 ist in Figur 1 dargestellt. Der Güllemixer 1 besitzt einen Führungsrahmen 2, an dem ein Motor 3 mit einem Schwert 4 höhenverstellbar angeordnet ist. Das Schwert 4 umfasst eine Rührwelle 5 mit Lagerstützen 6a und 6b für eine Lagerstelle 7 im vorderen Bereich der Rührwelle 5. Am vorderen Ende der Rührwelle 5 sind schwenkbare Rührflügel 8, 9 angebracht. Die Rührwelle 5 mit Lagerstützen 6a, 6b, Lagerstelle 7 und Rührflügel 8, 9 bilden in einer entsprechenden Drehstellung der Rührflügel 8, 9 ein plattenartiges Einsteckteil, das in schmale und kurze Spaltenschlitze eines Spaltenbodens in einem Stall einführbar ist. Der Führungsrahmen 2 ist an einem Fahrgestell 10 angebracht, das vier Laufräder 11, 12 umfasst. Der Motor 3 sitzt an einer Verschiebehalterung 15, über welche er mit dem Schwert 4 z.B. durch einen Spaltenschlitz in einen Güllekanal absenkbar ist.

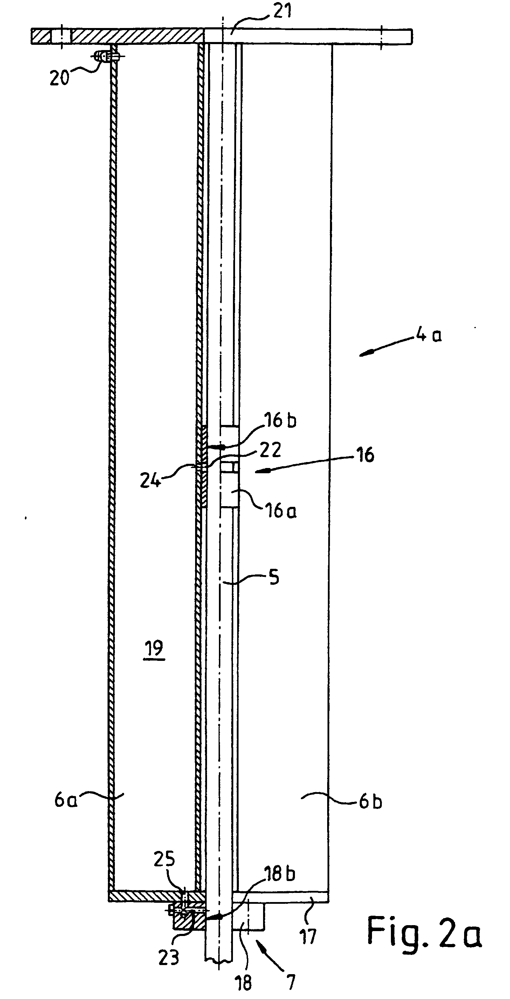

In den Figuren 2a bis d sind fünf unterschiedliche Ausführungsformen eines Schwerts 4a bis 4e für einen Güllemixer 1 gemäß Figur 1 in einer teilweise geschnittenen Seitenansicht ohne Rührflügel dargestellt. Die fünf Ausführungsformen weisen im Unterschied zum Schwert gemäß Figur 1 eine zweite Lagerstelle 16 ungefähr in der Mitte der Längserstreckung der Rührwelle 5 zusätzlich zur Lagerstelle 7 auf. Durch diese Maßnahme wird die Rührwelle 5 insbesondere im Hinblick auf hohe Drehzahlen und eine hohe Rührlast zusätzlich stabilisiert, was einen Rundlauf in diesen Betriebssituationen sicherstellt. Dadurch kann ein erhöhter Verschleiß vermieden werden.

Das Schwert 4a gemäß Figur 2a weist zwei hohle Lagerstützen 6a und 6b auf, die parallel geführt sind. In der Längserstreckung des Schwerts 4a ungefähr im mittleren Bereich ist die Lagerstelle 16 in Form eines Gleitlagers zwischen den Lagerstützen 6a und 6b befestigt. Die Lagerstützen 6a und 6b sind an ihrem unteren Ende mit einer Montageplatte 17 verbunden, an welcher ein Lagerelement 18 angeordnet ist, welches die untere Gleitlagerstelle 7 für die Rührwelle 5 ausbildet. Die Rührwelle 5 ist hierzu durch die Montageplatte und das Lagerelement 18 hindurchgeführt.

Beide Lagerstützen 6a und 6b sind hohl. Die linke Lagerstütze 6a wird als Vorratstank 19 sowohl für die Schmierung der Lagerstelle 7 als auch der Lagerstelle 16 genutzt.

Die hohle Lagerstütze 6a kann über einen Schmiernippel 20 mit Schmiermittel befüllt werden, und zwar vorzugsweise so weit, dass der Schmiermittelpegel zumindest bis zur mittleren Lagerstelle 16 reicht.

Die hohlen Lagerstützen 6a und 6b sind oben durch einen Anschlussflansch 21 verschlossen, mit dessen Hilfe das Schwert 4a mit einem Motor 3 eines Güllemixers 1 verbunden werden kann.

Ein Lagerelement 16a der mittleren Lagerstelle 16 sowie das Lagerelement 18 der unteren Lagerstelle 7 weisen jeweils einen Kanal 22, 23 auf, durch welchen mit einer entsprechenden Durchführung 24, 25 in der Lagerstütze 6a die jeweilige Lagerfläche 16b, 18b der Lagerstelle 16 bzw. 7 mit dem Inhalt des Vorratstanks 19 in Verbindung steht. Solange Schmiermittel im Vorratstank 19 mit einem Füllstand vorhanden ist, der über der Durchführung 24 liegt, kann sowohl die untere Lagerfläche 18b als auch die obere Lagerfläche 16b mit Schmiermittel versorgt werden.

Der Schmiervorgang der Lagerstellen kann sich wie folgt gestalten:

Sobald die mittlere Lagerstelle 16 nicht von Gülle umflutet wird, kann eine Erhitzung der Lagerstelle 16 und weiterer Bereiche des Schwerts um die Lagerstelle 16 stattfinden. Aufgrund dessen wird sich auch das im Schwert befindliche Schmiermittel, zum Beispiel ein normalerweise zähflüssiges Fett erwärmen, was zur Folge hat, dass das Fett durch die Verbindungskanäle 24, 25 zur Lagerfläche 16b fließt und somit diese schmiert.

Ein ähnlicher Fall kann auch für die untere Lagerstelle 7 auftreten, wenn diese im Betrieb von Gülle nicht umflutet wird, weil die Rührflügel in einer vornehmlich trockenen Schwimmdecke arbeiten oder aufgrund der hydrodynamischen Situation an den Rührflügeln bei schneller Drehzahl ein güllefreier Bereiche an der Lagerstelle entsteht.

An der unteren Lagerstelle 7 wird jedoch ein Schmiervorgang auch dadurch in Gang gebracht, dass durch erhöhte Schwertvibrationen in diesem Bereich Schmiermittel in die Lagerstelle nachfließen kann.

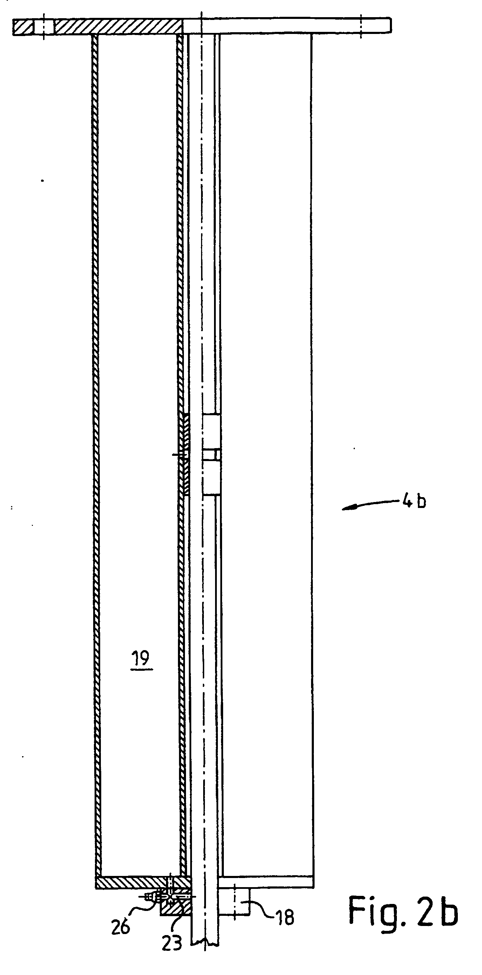

Das Schwert 4b gemäß Figur 2b unterscheidet sich von der Ausführungsform gemäß Figur 2a lediglich dadurch, dass zur Befüllung des Vorratstanks 19 anstatt eines oben liegenden Schmiernippels ein Schmiernippel 26 am Lagerelement 18 als Abzweigung vom Kanal 23 angebracht ist.

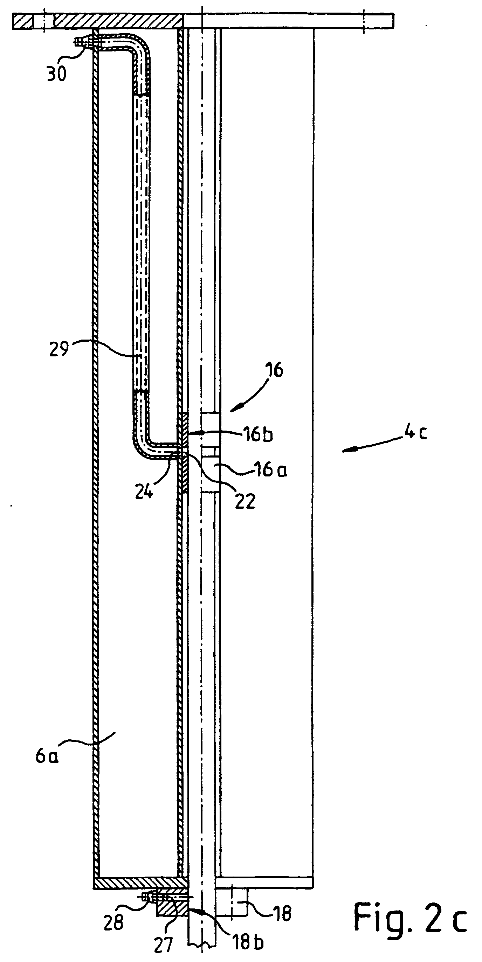

Das Schwert 4c nach Figur 2c weist am Lagerelement 18 eine Bohrung 27 auf, die zur Lagerfläche 18b führt und auf der gegenüberliegenden Seite mit einem Schmiernippel 18 verschlossen ist. In diesem Fall stellt die Bohrung 27 einen wenn auch volumenmäßig kleinen Vorratstank für Schmiermittel dar. Beim Schwert 4c ist darüber hinaus innerhalb der hohlen Lagerstütze 6a ein Rohrabschnitt 29 angeordnet. Das Innere des Rohrabschnitts 29 ist an einem Ende durch einen Schmiernippel 30 verschlossen, der außerdem durch die Wandung der Lagerstütze 6a geführt ist. Das andere Ende steht über die Durchführung 24 und den Kanal 22 mit der Lagerfläche 16b der mittleren Lagerstelle 16 in Verbindung. Durch diese Maßnahme bildet das Volumen des Rohrabschnitts 29 einen Vorratstank, der über den Schmiernippel 30 befüllbar ist, wobei durch die Durchführung 24 bzw. den Kanal 22 beim Lagerelement 16a Schmiermittel an die Lagerfläche 16b gelangen kann.

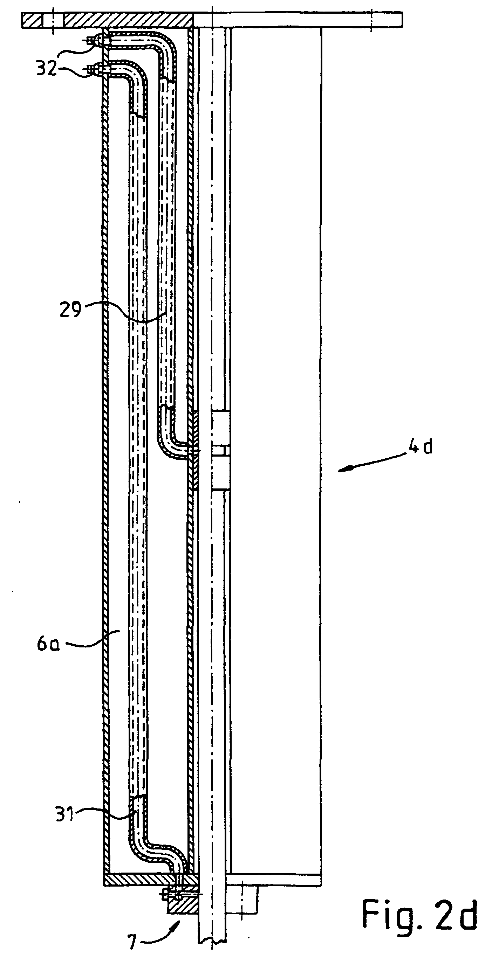

Im Schwert 4d nach Figur 2d wird die Lagerstelle 7 ebenso über einen entsprechenden Rohrabschnitt 31, der mit einem Schmiernippel 32 verschlossen ist, mit Schmiermittel versorgt. Auch der Rohrabschnitt 31 ist innerhalb der hohlen Lagerstütze 6a angeordnet.

Durch den Einsatz der gebogenen Rohrabschnitte kann sehr gezielt Schmiermittel zur jeweiligen Lagerstelle geführt werden, wobei ein nur vergleichsweise kleines Volumen von Schmiermittel für eine sichere Schmierung der Lagerstellen erforderlich ist.

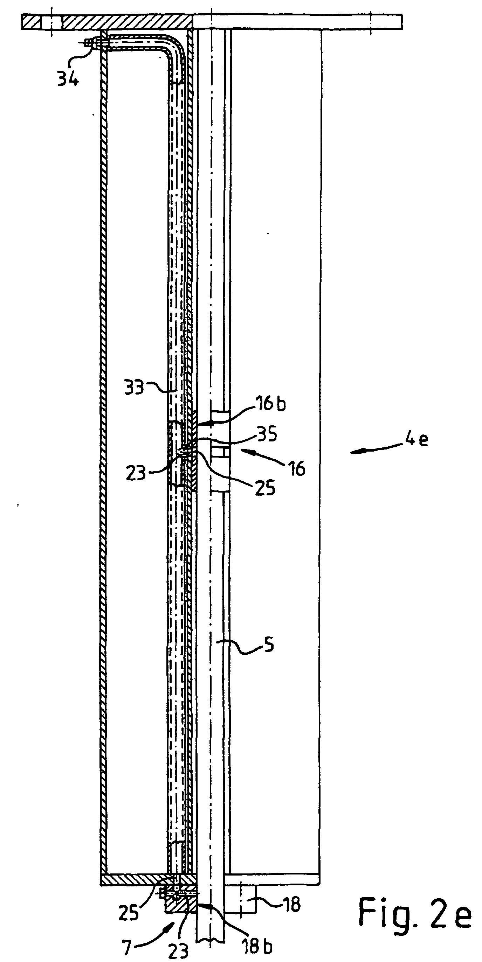

Eine weitere Variante der Schmiermittelzuführung über einen Rohrabschnitt ist beim Schwert 4e gemäß Figur 2e dargestellt. Bei dieser Ausführungsform verläuft ein Rohrabschnitt 33, der durch einen Schmiernippel 34 mit Schmiermittel versorgt werden kann, an der mittleren Lagerstelle 16 vorbei bis zur unteren Lagerstelle 7. An der unteren Lagerstelle 7 steht das Rohrvolumen über die Durchführung 23 und den Kanal 25 mit der Lagerfläche 18b des Lagerelements 18 in Verbindung.

An der mittleren Lagerstelle 16 zweigt vom Rohrabschnitt 33 ein Rohrstutzen 35 ab, der über die Durchführung 24 und den Kanal 22 die Lagerfläche 16b der mittleren Lagerstelle 16 mit dem Rohrvolumen verbindet.

Bei entsprechendem Füllstand des Rohrabschnitts 33 kann somit die Lagerstelle 7 als auch die Lagerstelle 16 mit Schmiermittel versorgt werden.

Die Figuren 2a bis 2e zeigen vielfältige Möglichkeiten, ein gewisses Vorratsvolumen für Schmiermittel an einem Schwert eines Güllemixers für die Schmierung von einem oder mehreren Lagerstellen der Rührwelle 5 bereitzustellen. Durch eine ausreichende Schmierung der Lagerstellen kann sowohl ein Verschleiß der Lagerelemente 16a, 18 als auch der Rührwelle 5 vermieden werden. Insgesamt wird hierdurch eine lange Lebensdauer der Vorrichtung gewährleistet.

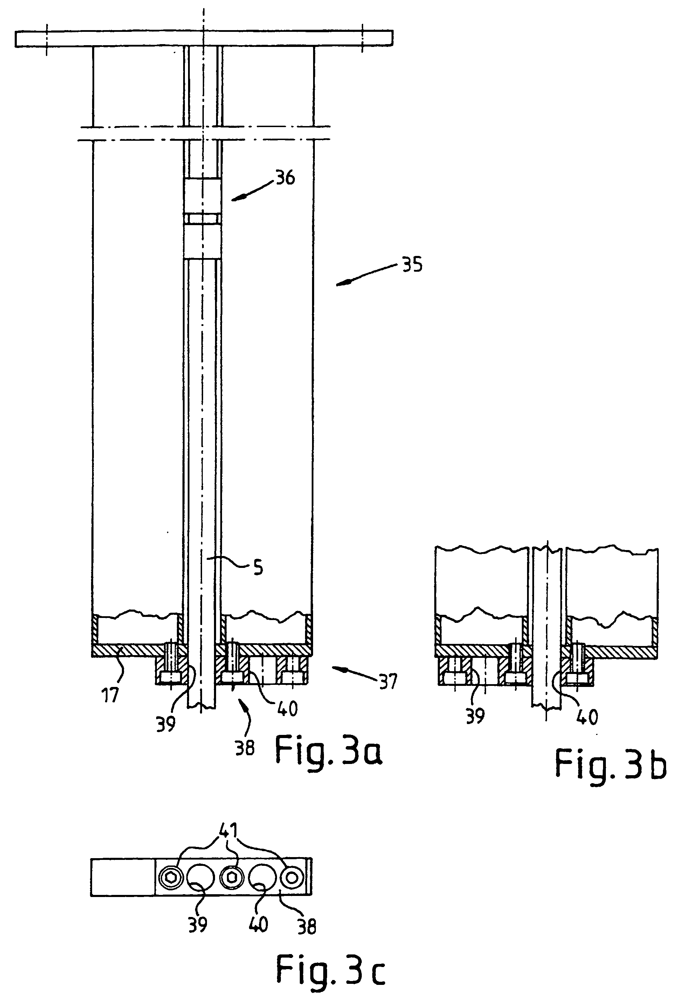

In Figur 3a ist ein Schwert 35 mit zwei Lagerstellen 36, 37 dargestellt. Die Lagerstelle 37 umfasst ein Lagerelement 38, das zwei Lagerbohrungen 39, 40 für die Durchführung und Lagerung der Rührwelle 5 aufweist. Darüber hinaus besitzt das Lagerelement 38 weitere Bohrungen, durch welche es möglich ist, das Lagerelement 38 derart an der Montageplatte 17 zu befestigen, dass sowohl die Lagerbohrung 39 als auch die Lagerbohrung 40 zur Lagerung der Welle 5 genutzt werden kann.

Auf diese Weise kann das Lagerelement 38, für den Fall, dass eine Lagerbohrung abgenutzt ist, hier beispielhaft durch Öffnen von zwei Schraubenverbindungen gelöst und dann derart versetzt angebracht, dass die zweite Lagerbohrung (in Figur 3b die Lagerbohrung 40) im Weiteren die Lagerung der Welle 5 übernimmt. Damit wird die Lebensdauer des Lagerelements verdoppelt.

### Bezugszeichenliste:

- 1: Güllemixer
- 2: Führungsrahmen
- 3: Motor
- 4: Schwert
- 4a: Schwert
- 4b: Schwert
- 4c: Schwert
- 4d: Schwert
- 4e: Schwert
- 5: Rührwelle
- 6a: Lagerstütze
- 6b: Lagerstütze
- 7: Lager
- 8: Rührflügel
- 9: Rührflügel
- 10: Fahrgestell
- 11: Rad
- 12: Rad
- 15: Verschiebehalterung
- 16: mittlere Lagerstelle
- 16a: Lagerelement
- 16b: Lagerfläche
- 17: Montageplatte
- 18: Lagerelement
- 18b: Lagerfläche
- 19: Vorratstank
- 20: Schmiernippel
- 21: Anschlussflansch
- 22: Kanal
- 23: Kanal
- 24: Durchführung
- 25: Durchführung
- 26: Schmiernippel
- 27: Bohrung
- 28: Schmiernippel
- 29: Rohrabschnitt
- 30: Schmiernippel
- 31: Rohrabschnitt
- 32: Schmiernippel
- 33: Rohrabschnitt
- 34: Schmiernippel
- 35: Schwert
- 36: Lagerstelle
- 37: Lagerstelle
- 38: Lagerelement
- 39: Lagerbohrung
- 40: Lagerbohrung
- 41: Bohrung

## Patentansprüche

1. Vorrichtung zum Homogenisieren von Gülle, im folgenden mit Güllemixer (1) bezeichnet, mit einem Gestell (2) an dem ein Motor (3) mit plattenartiger Rühreinrichtung, im folgenden mit Schwert (4, 4a bis 4e) bezeichnet, angebracht ist, wobei das Schwert (4, 4a bis 4e) eine Rührwelle (5) mit Rührflügel (8, 9) und eine stütze (6a, 6b) mit einer Lagerstelle (7, 16, 36, 37) für die Rührwelle (5) aufweist,
**dadurch gekennzeichnet, dass** das Schwert (4, 4a bis 4e) einen Vorratstank für Schmiermittel (19, 29, 31, 33) umfasst, der mit der Lagerstelle (7, 16) in Verbindung steht und in der zumindest teilweise hohl ausgebildeten Stütze (6a, 6b) ausgebildet ist.

2. Vorrichtung nach Anspruch 1, **dadurch gekennzeichnet, dass** der Vorratstank als Rohrabschnitt (29, 31, 33) ausgestaltet ist, der in der Stütze (6a) verläuft.

3. Vorrichtung nach einem der vorhergehenden Ansprüche, **dadurch gekennzeichnet, dass** der Vorratstank (19, 29, 31, 33) durch einen Schmiernippel (20, 26, 28, 30, 32, 34) befüllbar ist.

4. Vorrichtung nach einem der vorhergehenden Ansprüche, **dadurch gekennzeichnet, dass** wenigstens zwei Vorratstanks (29, 31) zur Versorgung von mindestens zwei Lagerstellen (7, 16) vorgesehen sind.

5. Vorrichtung nach einem der vorhergehenden Ansprüche, **dadurch gekennzeichnet, dass** die Lagerstelle (36) ein Lagerelement (38) umfasst, das wenigstens zwei nebeneinander liegende Lageröffnungen (39, 40) aufweist, durch welche die Rührwelle (5) durchführbar ist.

## Claims

1. Device for homogenising slurry, in the following referred to as a slurry mixer (1), with a framework (2) onto which a motor (3) is attached with a plate-like agitator, in the following referred to as a wand (4, 4a to 4e), whereby the wand (4, 4a to 4e) comprises an agitator shaft (5) with agitator blades (8, 9) and a support (6a, 6b) with a point of support (7, 16, 36, 37) for the agitator shaft (5), **characterised in that** the wand (4, 4a to 4e) includes a supply tank for a lubricant (19, 29, 31, 33) which is connected with the point of support (7, 16) and is formed in the at least partly hollow support (6a, 6b).

2. Device according to claim 1, **characterised in that** the supply tank is designed as a tubular section (29, 31, 33) which runs inside the support (6a).

3. Device according to one of the preceding clams, **characterised in that** the supply tank (19, 29, 31, 33) can be filled by means of a lubrication nipple (20, 26, 28, 30, 32, 34).

4. Device according to one of the preceding claims, **characterised in that** at least two supply tanks (29, 31) are provided for supplying at least two points of support (7, 16).

5. Device according to one of the preceding claims, **characterised in that** the point of support (36) includes a bearing element (38) which comprises at least two adjacent bearing openings (39, 40) through which the agitator shaft (5) can be fed.

## Revendications

1. Dispositif pour homogénéiser du lisier, désigné ci-après mélangeur de lisier (1), comprenant un bâti (2) sur lequel est fixé un moteur (3) avec un dispositif mélangeur de type plaque, désigné ci-après lame (4, 4a à 4e), la lame (4, 4a à 4e) présentant un arbre agitateur (5) avec des pales agitatrices (8, 9) et un support (6a, 6b) avec un palier (7, 16, 36, 37) pour l'arbre agitateur (5),
**caractérisé en ce que** la lame (4, 4a à 4e) comprend un réservoir de stockage (19, 29, 31, 33) pour le lubrifiant, lequel réservoir est en liaison avec le palier (7,16) et est formé dans le support (6a, 6b) réalisé au moins en partie creux.

2. Dispositif selon la revendication 1,
**caractérisé en ce que** le réservoir de stockage est réalisé sous la forme d'un segment de tuyau (29, 31, 33), lequel s'étend dans le support (6a).

3. Dispositif selon l'une des revendications précédentes,
**caractérisé en ce que** le réservoir de stockage (19, 29, 31, 33) peut être rempli par l'intermédiaire d'un raccord de graissage (20, 26, 28, 30, 32, 34).

4. Dispositif selon l'une des revendications précédentes,
**caractérisé en ce qu'**il est prévu au moins deux réservoirs de stockage (29, 31) pour alimenter au moins deux paliers (7, 16).

5. Dispositif selon l'une des revendications précédentes,
**caractérisé en ce que** le palier (36) comprend un élément de palier (38), lequel présente au moins deux ouvertures de palier (39, 40) situées l'une à côté de l'autre, à travers lesquelles on peut faire passer l'arbre agitateur (5).
